# EUROPEAN PATENT SPECIFICATION

(11) **EP 3 854 726 B1**
(45) Date of publication and mention of the grant of the patent: **26.02.2025**
(21) Application number: 19883263.6
(22) Date of filing: 02.08.2019
(51) Int. Cl.: B65G 1/04, B65G 1/137

(54) **CARGO PICKING SYSTEM AND METHOD**
FRACHTKOMMISSIONIERUNGSSYSTEM UND -VERFAHREN
SYSTÈME ET PROCÉDÉ DE RAMASSAGE DE CARGAISONS

(30) Priority: 06.11.2018 CN 201811309741
(43) Date of publication of application: 28.07.2021
(73) Proprietor: Beijing Jingdong Qianshi Technology Co., Ltd., Beijing 100176 (CN)
(72) Inventor: WANG, Zhao, Beijing 100086 (CN)
(74) Representative: Prüfer & Partner mbB Patentanwälte · Rechtsanwälte
(86) International application number: PCT/CN2019/099079
(87) International publication number: WO 2020/093744

(56) References cited:
- WO-A1-2018/189110
- CN-A- 107 472 787
- CN-A- 107 826 580
- CN-A- 108 706 265
- CN-A- 108 726 064
- CN-U- 206 447 088
- FR-A1- 3 042 182
- JP-A- S49 102 080
- JP-B2- 5 306 371
- JP-U- H0 642 810
- KR-A- 20160 136 795
- US-A1- 2018 305 122
- US-B1- 7 381 022

## Description

### RELATED APPLICATION

The application is based upon and claims priority of International Patent Application No. PCT/CN2019/099079, filed on August 2, 2019, which is based on and claims priority to Chinese Patent Application No. 201811309741.2, filed on November 6, 2018.

### TECHNICAL FIELD

The present disclosure relates to the field of logistics warehousing, and in particular, to a goods picking system and method.

### BACKGROUND

With the rapid development of e-commerce as well as the changes of the consumption habit and the consumption mode, the e-commerce warehousing industry has more and more operation quantity in disassembling and picking, and the requirements are higher and higher. The speed and accuracy of the picking operation often determine the order fulfillment efficiency and the customer service quality; therefore, how to increase the picking speed has attached more and more attention from the e-commerce warehousing and logistics enterprises.

To cope with the picking challenges of a huge number of orders of multiple varieties, small batches and multiple batches as well as the increasingly obvious pressure of human cost, it is a general trend to adopt automated logistics system. At the present stage, the "goods-to-person" picking system with high picking efficiency and storage efficiency and capable of greatly reducing manpower and labor intensity is becoming the mainstream of the logistics industry, and is increasingly applied to e-commerce, medicine, clothing, daily chemical and other industries which are mainly engaged in disassembling and picking operations.

The "goods-to-person" picking system: during the picking operation of the logistics center, the automated logistics system carries goods to a fixed station for picking, that is, the goods move and people do not move. The "goods-to-person" picking system greatly reduces the running distance of picking operators, thereby achieving the picking efficiency several times higher than that of the "person-to-goods" mode, greatly reducing the labor intensity and having outstanding advantages in the aspects of storage density and manpower saving. Therefore, the "goods-to-person" picking system has become a very important picking method in the logistics distribution center.

At present, the "goods-to-person" picking system has the problems that the system includes a large amount of conveying lines and has high cost, and it is difficult to expand once the shelf and the conveying lines are mounted. Moreover, the system, adopting a method that a shuttle vehicle runs on the shelf, has low flexibility.

US20180305122A1: An order picking system includes an automated guided trolley with at least two rolling wheels for taking objects of an order from at least one rack and two posts. The automated guided trolley includes climbing elements, which are adapted to cooperate with the posts so as to enable the trolley to rise along the post and prevent the tilting of the trolley, and which includes at least one counter-wheel intended to roll on one of the posts, mounted on a movable bracket. US20180305122A1 discloses the features of the preamble of claim 1.

CN108726064A: The invention relates to a novel warehousing system and a storage method thereof. The novel warehousing system comprises a storage device, a sorting workbench and an AGV. The storage device comprises multiple pairs of goods shelves which are arranged oppositely and storage boxes used for storing goods. Each goods shelf is provided with multiple storage holes used for storing the corresponding storage boxes. A traveling channel for the AGV is formed between every two opposite goods shelves. Ascending-and-descending assemblies are arranged at the opposite sides of the goods shelves. The ascending-and-descending assemblies are symmetrically arranged at the two sides of the storage holes. According to the novel warehousing system and the storage method thereof, the AGV is arranged to be matched with the storage device so that the AGV can precisely store and pick the storage boxes between the sorting workbench and the goods shelves. The AGV can move horizontally and can also vertically ascend and descend; thus, materials can be stored and picked in a three-dimensional space through the single AGV; the system is more flexible, reliability is higher, and the cost is lower; and the requirement of a warehouse for the site is lowered.

JPH06042810U: The automated warehouse having a pair of front and rear shelf device 2 and a number of shelf 4 provided at a predetermined interval in the longitudinal direction, and a traveling vehicle 16 provided on the left and right vertically movably back and forth between the shelf device 2 ·, or when the rack 19 is provided on the guiding post 3 is provided with a shelf device 2, and a slide fork 17 of the vehicle 16 provided on the vehicle 16, being guided by the lateral rail 20 is provided in the height direction at predetermined intervals on a shelf device 2.

WO2018189110A1: Order-picking system (12) comprising a self-guided carriage (103) intended to order-pick items from at least one rack (100), having at least two rolling wheels (202) and motorised climbing means (204) formed by gearwheel carriers (214) capable of interacting with two pairs of posts (105) so as to allow the carriage to move up along the posts. A roller chain (500) is attached to each of the posts and extends parallel to the longitudinal axis of the post to which it is attached and is intended to receive the gearwheel cooperating with the post to which it is attached, and each movable support has means for rigidly connecting (402, 403, 404) to one of said four posts in order to maintain a predetermined distance between the axis of the gearwheel and the chain.

JPS49102080A: A gondola is freely installed on guide rails provided in the vertical and horizontal directions, a plurality of electromagnets are appropriately installed at the intersection of the guided portion of the gondola and the guide rail, and the intersection of the guide rails A self-propelled gondola device which is patented in the above-mentioned magnetic action on the electromagnetic so that the traveling direction of the gondola can be freely selected and traveled.

### SUMMARY

According to the present invention, a goods picking system includes: a shelf, including at least one layer of carrier, each layer of the carrier including at least one goods area for storing goods; and a picking vehicle, configured to not only run on the shelf, but also run outside of the shelf for loading, unloading and transporting goods.

In some embodiments, the picking vehicle is configured to run from the shelf to an area away from the shelf; and/or the picking vehicle is configured to run from the area away from the shelf to the shelf.

According to the invention, the goods picking system further includes a lifting mechanism configured to make the picking vehicle run up and down on the shelf to load and unload the goods.

In some embodiments, the goods picking system includes at least two shelves, wherein a laneway for the picking vehicle to run is formed between at least one group of adjacent two shelves.

In some embodiments, the goods picking system includes: a first lifting mechanism, arranged between one end of the picking vehicle and the shelf on one side of the laneway; and a second lifting mechanism, arranged between the other end of the picking vehicle and the shelf on the other side of the laneway.

In some embodiments, the goods area includes at least one group of L-shaped plates arranged oppositely, wherein the L-shaped plates arranged oppositely are configured to jointly bear the goods.

In some embodiments, the picking vehicle includes a supporting plate, wherein the supporting plate is configured to perform telescopic action relative to the shelf to load and unload the goods.

In some embodiments, the picking vehicle includes a limiting piece arranged on the supporting plate in an up-and-down liftable manner, wherein the limiting piece is in an ascending state relative to the supporting plate for limiting the goods on the supporting plate.

According to the invention, the picking vehicle includes a vehicle body, and a running wheel and a universal wheel which are arranged on the vehicle body for realizing that the picking vehicle runs outside of the shelf.

According to the invention, the lifting mechanism includes a linear motor, wherein a stator or a rotor of the linear motor is arranged on the shelf, and correspondingly, the rotor or the stator of the linear motor is arranged on the picking vehicle.

In some embodiments, the rotor or the stator arranged on the picking vehicle is configured to extend out relative to the picking vehicle or retract into the picking vehicle.

In some embodiments, the lifting mechanism includes a guide wheel, wherein the guide wheel is arranged on the picking vehicle for guiding when the picking vehicle runs on the shelf.

In some embodiments, the guide wheel is configured to extend out relative to the picking vehicle or retract into the picking vehicle.

In some embodiments, the lifting mechanism includes a guide wheel, wherein the guide wheel is arranged on two sides of the rotor or the stator arranged on the picking vehicle.

In some embodiments, the goods picking system includes a picking station configured to pick the goods transported by the picking vehicle.

In some embodiments, the picking station includes: a picking position, configured to pick the goods transported here by the picking vehicle; an up ramp, connected to the picking position and configured to allow the picking vehicle run upward along the up ramp to the picking position; and a down ramp, connected to the picking position and configured to allow the picking vehicle run downward along the down ramp to depart from the picking position.

In some embodiments, the goods picking system further includes a first conveying line and a second conveying line, wherein the first conveying line is configured to convey an empty order box, and the second conveying line is configured to convey an order box after loading to a downstream check packaging station.

In some embodiments, the goods picking system further includes a first conveying line and a second conveying line, wherein the first conveying line is configured to convey an order box with goods, and the second conveying line is configured to convey an empty order box after unloading to downstream.

According to another aspect of the present invention, a goods picking method based on the above goods picking system includes: a picking vehicle runs from an area away from a shelf to the shelf; the picking vehicle runs to a target goods area on the shelf for loading and unloading goods; and the picking vehicle runs from the shelf to the area away from the shelf.

In some embodiments, the step: the picking vehicle runs from the area away from the shelf to the shelf, includes: the picking vehicle runs below the target goods area; the step: the picking vehicle runs to the target goods area on the shelf, includes: the picking vehicle runs upward along the shelf to the target goods area to complete loading or unloading; and the step: the picking vehicle runs from the shelf to the area away from the shelf, includes: the picking vehicle runs downward along the shelf to the bottom of the shelf so as to depart from the shelf.

According to one aspect of some embodiments of the present disclosure, the shelf of the goods picking system adopts a three-dimensional shelf, so as to increase a space utilization rate; the picking vehicle of the goods picking system is configured to not only run on the shelf, but also run outside of the shelf for loading, unloading and transporting the goods; the picking vehicle is configured to run, lift and load and unload goods so as to realize a goods-to-person picking mode; the number of the picking vehicle may be increased according to requirements, such that the problem that related shuttle vehicles have low flexibility is solved; moreover, equipment such as a conveying line, a lifting machine and the like between the three-dimensional shelf and a picking station in a related art is not required, so that cost is reduced.

### BRIEF DESCRIPTION OF THE DRAWINGS

FIG. 1 is a schematic three-dimensional diagram of a goods picking system according to some embodiments of the present disclosure;
FIG. 2 is a schematic top view of a goods picking system according to some embodiments of the present disclosure;
FIG. 3 is a schematic diagram of a local structure of a shelf according to some embodiments of the present disclosure;
FIG. 4 is a schematic diagram of a first state of a picking vehicle according to some embodiments of the present disclosure;
FIG. 5 is a schematic diagram of a second state of a picking vehicle according to some embodiments the present disclosure;
FIG. 6 is a schematic diagram of a picking vehicle ascending and descending along a shelf according to some embodiments of the present disclosure;
FIG. 7 is a local schematic diagram of a picking vehicle ascending and descending along a shelf according to some embodiments of the present disclosure;
FIG. 8 is a schematic diagram of cooperation between a picking vehicle and a lifting mechanism according to some embodiments of the present disclosure;
FIG. 9 is a schematic partial enlarged diagram of cooperation between a picking vehicle and a lifting mechanism according to some embodiments of the present disclosure; and
FIG. 10 is a schematic partial enlarged diagram of cooperation between a picking vehicle and a lifting mechanism according to some other embodiments of the present disclosure.

Reference numerals in the drawings:
1-shelf; 11-upright column; 12-L-shaped plate; 13-laneway;
2-picking vehicle; 21-vehicle body; 22-supporting plate; 23-limiting piece; 24-running wheel; 25-universal wheel;
3-lifting mechanism; 31-linear motor; 311-stator; 312-rotor; 32-guide wheel; 33-brake;
4-picking station; 41-picking position; 42-up ramp; 43-down ramp;
5-first conveying line;
6-second conveying line;
7-turnover box;
8-order box;
9-charging position;
a, b, c-air gap.

### DETAILED DESCRIPTION

The technical solutions in the embodiments will be described clearly and completely with reference to the accompanying drawings in the embodiments of the present disclosure. Apparently, the described embodiments are merely a portion rather than all of the embodiments of the present disclosure. All other embodiments made on the basis of the embodiments of the present disclosure by a person of ordinary skill in the art without paying any creative effort shall be included in the protection scope of the present disclosure.

In the description of the present disclosure, it should be understood that an azimuth or position relationship indicated by terms "center", "longitudinal", "transverse", "front", "rear", "left", "right", "vertical", "horizontal", "top", "bottom", "inner", "outer" and the like is an azimuth or position relationship based on the accompanying draws, which is only for facilitating description of the present disclosure and simplifying description, but not indicates or implies that the referred device or component must have a specific azimuth and perform construction and operation in the specific azimuth; therefore, it cannot be interpreted as a limitation to the protection scope of the present disclosure.

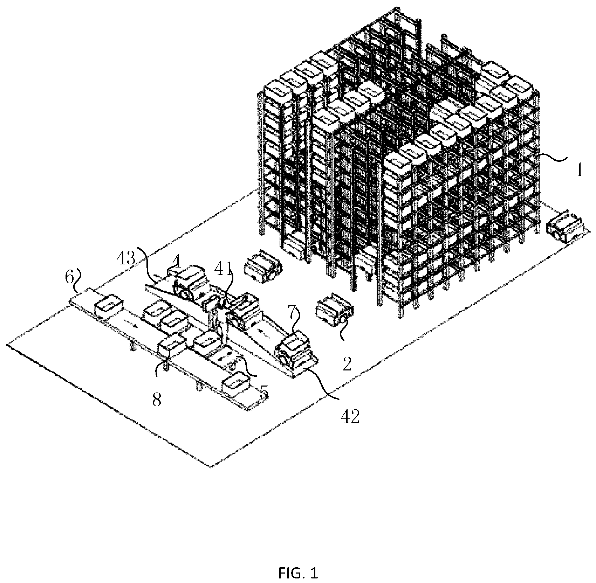

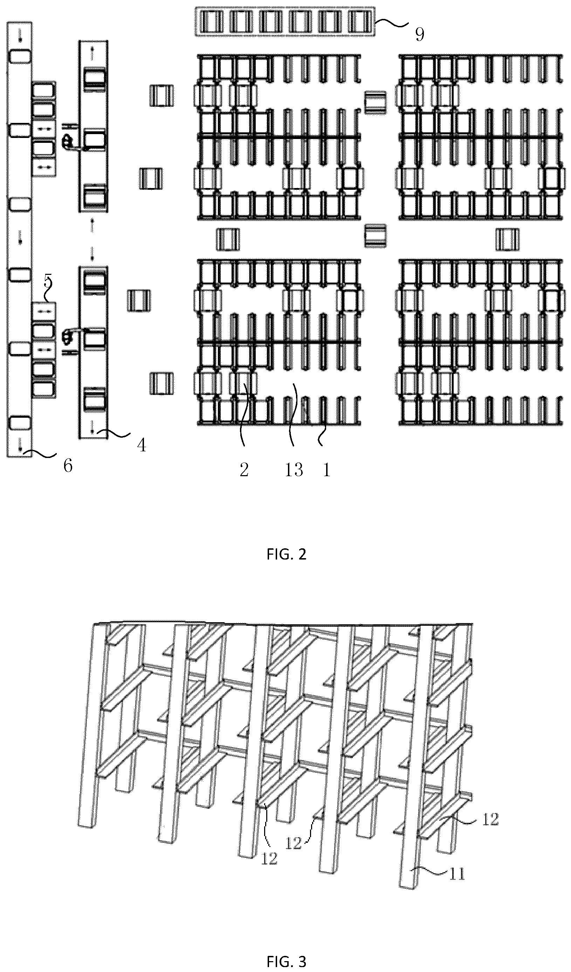

FIG. 1 and FIG. 2 are schematic diagrams of a goods picking system according to some embodiments of the present disclosure.

The goods picking system includes a shelf 1, wherein the shelf 1 includes at least one layer of carrier, and each layer of the carrier includes at least one goods area for storing goods.

Optionally, all goods areas on each layer of carrier are arranged in a row.

In some embodiments, as shown in FIG. 3, the shelf 1 includes a plurality of upright columns 11 for supporting, and a cross strut and an inclined strut for reinforcing.

In some embodiments, as shown in FIG. 3, each goods area includes a group of L-shaped plates 12 arranged oppositely, and the L-shaped plates 12 arranged oppositely are configured to jointly bear the goods.

Optionally, the L-shaped plates 12 arranged oppositely are respectively mounted on at least one upright column 11 arranged oppositely, and the two L-shaped plates 12 between the upright columns 11 arranged oppositely form a goods area for storing a turnover box 7.

In the present disclosure, the goods on the shelf 1 may be directly placed at the goods area, or the goods on the shelf 1 are placed at the goods area in the form of being placed on the turnover box 7. Loading and unloading goods by a picking vehicle 2 includes placing the empty turnover box 7 on the shelf 1 or placing the turnover box with goods on the shelf 1; and loading and unloading goods by the picking vehicle 2 further includes taking down and transporting the goods or the turnover box 7 with the goods on the shelf 1.

According to the invention, the goods picking system includes a picking vehicle 2, wherein the picking vehicle 2 is configured to not only run on the shelf 1, but also run outside of the shelf 1 for loading, unloading and transporting the goods. The picking vehicle 2 is configured to run on the shelf 1 and run away from the shelf 1, and has high flexibility and extensibility. The shelf 1 is configured to be set according to a height of a warehouse to make full use of the space in the warehouse, thereby achieve high space utilization rate. Moreover, the picking vehicle 2 picks goods from the shelf 1, or conveys the picked goods to the goods area of the shelf 1, with clear objective and high cost performance.

Further, the goods picking system includes at least one picking vehicle 2. The number of the picking vehicle 2 may be increased according to requirements.

The picking vehicle 2 is configured to run, lift as well as load and unload goods, thereby realizing a goods-to-person picking mode.

The shelf 1 adopts a three-dimensional shelf, thereby increasing a space utilization rate.

The picking vehicle 2 is configured to run, lift as well as load and unload goods, and the number of the picking vehicle 2 may be increased according to requirements, such that the problem that a shuttle vehicle has low flexibility is solved; moreover, equipment such as a conveying line, a lifting machine and the like between the three-dimensional shelf and a picking station is not required, so that cost is reduced.

The picking vehicle 2 is configured to run, lift as well as load and unload goods: functional structures that may freely shuttle on the shelf, lift up and down and run on the ground are integrated so as to be combined into a multifunctional picking vehicle 2 that may walk, lift and take boxes.

In some embodiments, the picking vehicle 2 is configured to run from the shelf 1 to an area away from the shelf 1.

Optionally, after picking goods from the goods area on the shelf 1, the picking vehicle 2 carries the goods from the shelf 1 to the area away from the shelf 1. Or after the picking vehicle 2 places the picked goods at the goods area on the shelf 1, the empty vehicle runs from the shelf 1 to the area away from the shelf 1.

In some embodiments, the picking vehicle 2 is configured to run from the area away from the shelf 1 to the shelf 1.

Optionally, the empty picking vehicle 2 runs from the area away from the shelf 1 to the shelf 1, and runs on the shelf 1 to the target goods area to pick the goods in the goods area into the picking vehicle 2. Or after the picking vehicle 2 carries the goods from the area away from the shelf 1 to the shelf 1 and runs on the shelf 1 to the target goods area, the goods on the picking vehicle are picked and placed at the goods area.

In some embodiments, the shelf 1 includes a bracket type shelf.

The goods picking system includes a lifting mechanism 3, and the lifting mechanism 3 is configured to make the picking vehicle 2 run up and down on the shelf 1 to load and unload the goods.

Optionally, the picking vehicle 2 runs upward on the shelf 1 through the lifting mechanism 3 to arrive at the target goods area and picks the goods in the goods area into the picking vehicle 2, or places the goods which the picking vehicle 2 carries in the target goods area.

In some embodiments, as shown in FIG. 2, the goods picking system includes at least two shelves 1, wherein a laneway 13 for the picking vehicle 2 to run is formed between at least one group of adjacent two shelves 1.

The two shelves 1 are arranged face to face at a certain interval so as to form a group of three-dimensional shelves. The space between the two shelves 1 is a laneway 13 for the picking vehicle 2 to run.

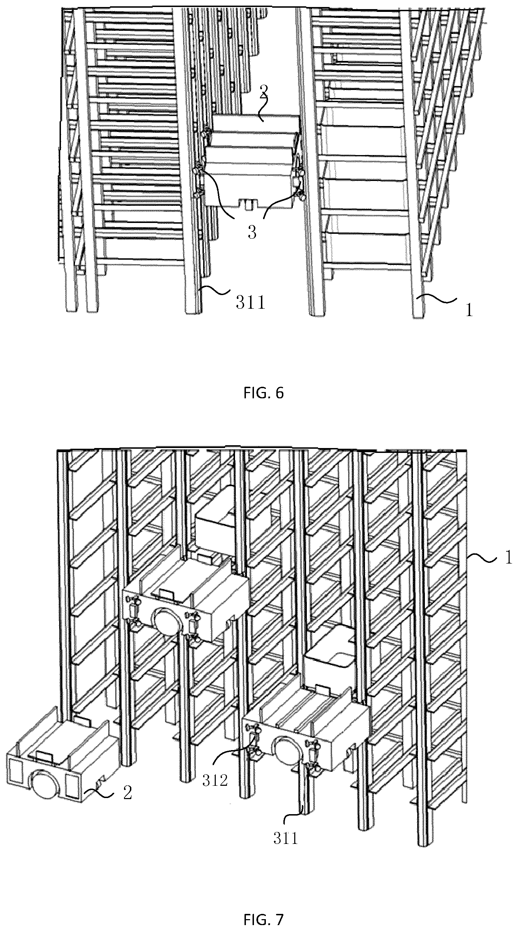

In some embodiments, as shown in FIG. 6 and FIG. 7, the lifting mechanism 3 includes a first lifting mechanism, and the first lifting mechanism is arranged between one end of the picking vehicle 2 and the shelf 1 on one side of the laneway 13.

The lifting mechanism 3 includes a second lifting mechanism, and the second lifting mechanism is arranged between the other end of the picking vehicle 2 and the shelf 1 on the other side of the laneway 13.

In the process that the picking vehicle 2 runs on the shelf 1, two ends of the picking vehicle 2 are respectively connected to one shelf 1 through the lifting mechanism 3. The two ends of the picking vehicle 2 are stressed evenly, thereby achieving operation stability.

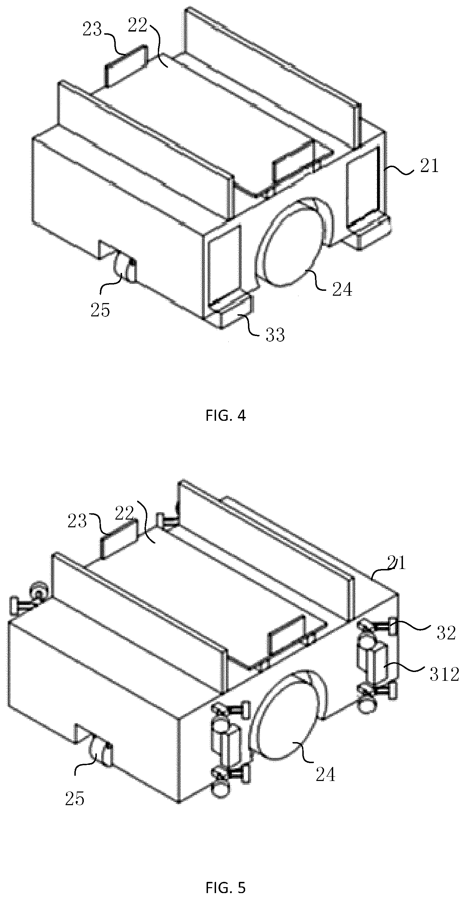

As shown in FIG. 4 and FIG. 5, the picking vehicle 2 includes a vehicle body 21.

In some embodiments, the picking vehicle 2 includes a supporting plate 22, and the supporting plate 22 is configured to perform telescopic action relative to the shelf 1 to load and unload the goods.

Further, the supporting plate 22 is arranged at the vehicle body 21.

The supporting plate 22 is configured to extend out relative to the vehicle body 21 to support the goods on the shelf 1, or convey the goods on the vehicle body 21 to the shelf 1.

The supporting plate 22 is configured to retract relative to the vehicle body 21 to pick the goods on the shelf 1 to the vehicle body 21, or the supporting plate 22 is configured to withdrawn to leave the goods carried on the shelf 1.

Optionally, the picking vehicle 2 includes a guide rail, and the supporting plate 22 runs along the guide rail to extend out or retract relative to the vehicle body 21.

In some embodiments, the picking vehicle 2 includes a limiting piece 23, and the limiting piece 23 is arranged on the supporting plate 22 in an up-and-down liftable manner.

When the limiting piece 23 is in an ascending state, the limiting piece 23 is higher than a plane where the supporting plate 22 is located. The limiting piece 23 is in the ascending state relative to the supporting plate 22 for limiting goods on the supporting plate 22.

When the limiting piece 23 is in a descending state, the limiting piece 23 is not higher than the plane where the supporting plate 22 is located.

Optionally, the limiting piece 23 includes a shifting fork or a vertical plate.

In the process that the supporting plate 22 extends out relative to the vehicle body 21 to support the goods on the shelf 1, the limiting piece 23 is in the descending state and is not higher than a plane where the supporting plate 22 is located.

In the process that the supporting plate 22 is retracted relative to the vehicle body 21 to bring the goods on the shelf 1 back to the vehicle body 21, the limiting piece 23 is in the ascending state, is higher than the plane where the supporting plate 22 is located and extends to the bottom of the goods (turnover box 7) for limiting the goods on the shelf 1 at the supporting plate 22; moreover, in the process of retracting the supporting plate 22, the goods on the supporting plate 22 are limited by the limiting piece 23t o prevent the goods from falling off the supporting plate 22 and bring the goods (turnover box 7) on the shelf 1 back to the vehicle body 21.

In the process that the supporting plate 22 extends out relative to the vehicle body 21 to convey the goods on the vehicle body 21 to the shelf 1, the limiting piece 23 is in the ascending state and is higher than the plane where the supporting plate 22 is located for limiting the goods on the supporting plate 22 so as to prevent the goods from falling off the supporting plate 22.

In the process that the supporting plate 22 retracts relative to the vehicle body 21 to withdraw the supporting plate 22 and leave the goods on the shelf 1, the limiting piece 23 is in the descending state and is not higher than the plane where the supporting plate 22 is located.

The picking vehicle 2 includes a vehicle body, 21, and a running wheel 24 and a universal wheel 25 which are arranged on the vehicle body 21. The running wheel 24 and the universal wheel 25 are configured to realize that the picking vehicle 2 runs outside of the shelf 1. The running wheel 24, the universal wheel 25 and the corresponding driving mechanism are configured to perform ground running, steering and other actions of the picking vehicle 2.

In some embodiments, the picking vehicle 2 includes an automatic guided vehicle (AGV).

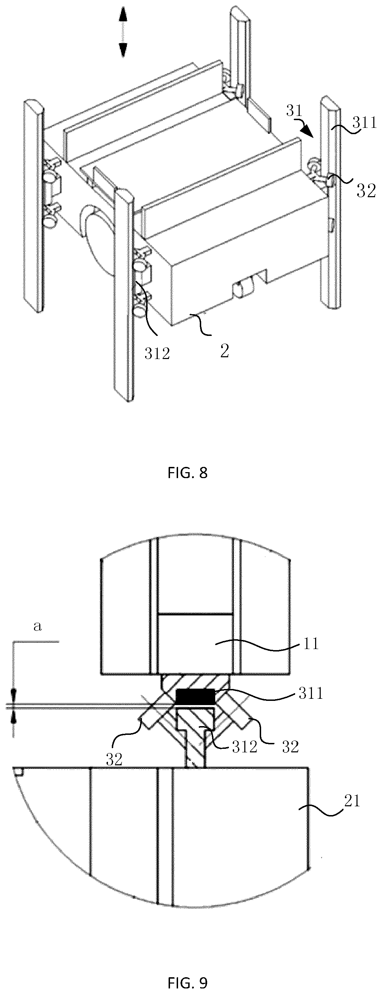

As shown in FIG. 8, the lifting mechanism 3 includes a linear motor 31, wherein a stator 311 or a rotor 312 of the linear motor 31 is arranged on the shelf 1, and correspondingly, the rotor 312 or the stator 311 of the linear motor 31 is arranged on the picking vehicle 2.

Optionally, the stator 311 or the rotor 312 of the linear motor 31 is arranged on an upright column 11 of the shelf 1.

The linear motor 31 is a transmission device that directly converts electric energy into the mechanical energy of linear motion without any intermediate conversion mechanism. The linear motor 31 may be regarded as being formed by sectioning a rotating motor along a radial direction and spreading into a plane. One side evolved from the stator is called as primary, and one side evolved from the rotor is called as secondary.

In actual application, the primary and the secondary may be manufactured into different lengths to ensure that coupling between the primary and the secondary remains unchanged within the required travel range. The linear motor may be short primary and long secondary, and may also be long primary and short secondary.

Further, the linear motor 31 may adopt a primary moving and secondary fixed arrangement mode, or a secondary moving and primary fixed arrangement mode.

In some embodiments, the stator 312 arranged on the picking vehicle 2 and the stator 311 fixed on the upright column 11 form a group of linear motor 31 to provide power for the picking vehicle 2 to lift up vertically.

The linear motor 31 is applied to the lifting mechanism 3 of the picking vehicle 2, the primary and the secondary are mounted on the shelf 1 and the picking vehicle 2 respectively, and the primary and the secondary may be separated and combined freely, such that the picking vehicle 2 can form a group of linear motor 31 at any position of the shelf 1.

As shown in FIG. 9, the linear motor 31 is configured to be a flat plate type. The opposite sides of the stator 311 and the rotor 312 are planes, and a guide wheel 32 is arranged at each of two sides of the rotor 312. The two guide wheels 32 cooperate with inclined surfaces of the two sides of the stator 311 for guidance; and the plane of the stator 311 and the plane of the rotor 312 are arranged oppositely, with an air gap therebetween.

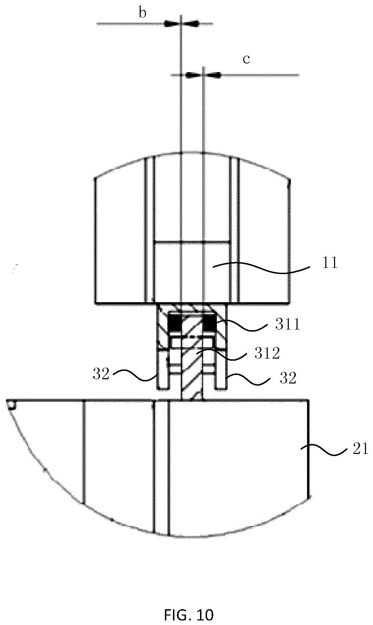

As shown in FIG. 10, the linear motor 31 is configured to be a U-shaped groove type. The stator 311 is set as a U shape, the rotor 312 extends into the U-shaped groove, and an air gap b and an air gap c are formed between the two sides of the rotor 312 and the stator 311 on the corresponding side. A guide wheel 32 is arranged on each of two sides of the rotor 312, and the two guide wheels 32 correspondingly abut against two sides of a U-shaped groove opening of the stator 311.

In the present disclosure, the lifting mechanism 3 of the picking vehicle 2 is driven and guided by the linear motor 31 and the guide wheels 32. The linear motor 31 is not limited to the forms shown in FIG. 9 and FIG. 10.

The lifting mechanism provided by the embodiment of the present invention has a simple structure, moves stably and has no mechanical contact except for the guide wheel 32, thereby greatly reducing wear and noise of parts.

In some embodiments, the rotor 312 or the stator 311 arranged on the picking vehicle 2 is configured to extend out relative to the picking vehicle 2 (as shown in FIG. 5) to cooperate with the stator 311 or the rotor 312 arranged on the shelf 1 to run on the shelf 1. The rotor 312 or the stator 311 arranged on the picking vehicle 2 is configured to retract into the picking vehicle 2 relative to the picking vehicle 2 (as shown in FIG. 4), which is beneficial for the picking vehicle 2 to run outside of the shelf 1.

That is, when the linear motor 31 is in a working state, the rotor 312 or the stator 311 arranged on the picking vehicle 2 is configured to extend out relative to the picking vehicle 2. When the linear motor 31 is in a non-working state, the rotor 312 or the stator 311 arranged on the picking vehicle 2 is configure to retract into the picking vehicle 2 relative to the picking vehicle 2.

In some embodiments, the lifting mechanism 3 includes a guide wheel 32, and the guide wheel 32 is arranged on the picking vehicle 2 for guiding when the picking vehicle 2 lifts up and down relative to the shelf 1.

In some embodiments, the guide wheel 32 is configured to extend out relative to the picking vehicle 2 (as shown in FIG. 5), and the guide wheel 32 is configured to retract into the picking vehicle 2 (as shown in FIG. 4).

That is, when the linear motor 31 is in a working state, the guide wheel 32 arranged on the picking vehicle 2 is configured to extend out relative to the picking vehicle 2 for guiding the operation of the picking vehicle 2. When the linear motor 31 is in a non-working state, the guide wheel 32 arranged on the picking vehicle 2 is configured to retract into the picking vehicle 2 relative to the picking vehicle 2.

In some embodiments, guide wheels 32 are arranged on two sides of the rotor 312 or the stator 311 arranged on the picking vehicle 2.

The two guide wheels 32 and the two inclined surfaces of the stator 311 form a group of linear guiding mechanism to provide guidance for the picking vehicle 2 to lift vertically.

In some embodiments, the lifting mechanism 3 includes a brake 33, and the brake 33 is telescopically arranged at the vehicle body 21. During work, the brake 33 extend out of the vehicle body 21 (as shown in FIG. 4) for holding the upright column 11 to generate a braking force, which is beneficial for the picking vehicle 2 to pick the goods on the shelf 1, or place the goods thereon on the shelf 1. When the brake 33 does not work, the brake 33 is retracted into the vehicle body 21 (as shown in FIG. 5).

In some embodiments, in addition to the linear motor 31, the lifting mechanism 3 may use a gear/rack structure, a chain wheel/chain structure or a synchronous belt wheel/synchronous belt structure which cooperate with each other and are arranged on the shelf 1 and the picking vehicle 2. Or the lifting mechanism 3 may further include a winch/steel wire rope structure arranged on the shelf 1 and other lifting modes.

In some embodiments, as shown in FIG. 1 and FIG. 2, the goods picking system includes a picking station 4, and the picking station 4 is configured to pick the goods transported by the picking vehicle 2.

In some embodiments, as shown in FIG. 1, the goods picking station 4 includes a picking position 41, and the picking position 41 is configured to pick the goods transported here by the picking vehicle 2.

In some embodiments, the picking station 4 includes an up ramp 42, and the up ramp 42 is connected to the picking position and configured to allow the picking vehicle 2 run upward along the up ramp to the picking position 41.

In some embodiments, the picking station 4 includes a down ramp 43, and the down ramp 43 is connected to the picking station and configured to allow the picking vehicle 2 run downward along the down ramp to depart from the picking position 41.

The picking station 4 is a manual picking station. After the picking vehicle 2 takes down the turnover box 7 on the shelf 1, the turnover box 7 is conveyed to the picking position 41 of the picking station 4 for operators to pick goods.

In some embodiments, the goods picking system includes a first conveying line 5, and the first conveying line 5 is configured to convey an empty order box and the order box after loading.

In some embodiments, the goods picking system includes a second conveying line 6, and the second conveying line 6 is configured to convey the order box after loading to a downstream check packaging station.

The empty order box 8 is conveyed from upstream through the second conveying line 6 to enter the first conveying line 5 and stop in place. The operator places the picked goods into the order box 8 on the first conveying line 5. After the box is full, the box is conveyed back to the second conveying line 6 and then is continuously conveyed downstream to a check packaging station.

In some embodiments, the first conveying line 5 is configured to convey the order box 8 with the goods, and the second conveying line 6 is configured to convey the empty order box 8 after unloading to the downstream.

The order box 8 with the goods is conveyed from upstream through the second conveying line 6 to enter the first conveying line 5 and stop in place. The operator picks the goods in the order box 8 on the first conveying line 5 into the picking vehicle 2, and the empty box is conveyed back to the second conveying line 6 to the downstream.

In some embodiments, the goods picking system includes a charging position 9, and the picking vehicle 2 without a task drives into the charging position 9 to be charged and wait for a new task.

Some embodiments provide a goods picking method based on the goods picking system, including:
a picking vehicle 2 runs from an area away from a shelf 1 to the shelf 1;
the picking vehicle 2 runs to a target goods area on the shelf 1 for loading and unloading goods; and
the picking vehicle 2 runs from the shelf to the area away from the shelf.

In some embodiments, the step: the picking vehicle 2 runs from an area away from a shelf 1 to the shelf 1, includes: the picking vehicle 2 runs below the target goods area.

In some embodiments, the step: the picking vehicle 2 runs to a target goods area on the shelf 1, includes: the picking vehicle 2 runs upward along the shelf 1 to the target goods area.

In some embodiments, the step: the picking vehicle 2 runs from the shelf to the area away from the shelf, includes: the picking vehicle 2 runs downward along the shelf 1 to the bottom of the shelf 1 so as to depart from the shelf 1.

In some embodiments, the goods picking method based on the goods picking system includes:
the picking vehicle 2 runs to the shelf 1 where a target goods is located;
the picking vehicle 2 is lifted by a lifting mechanism 3 to a loading layer where the target goods is located;
the picking vehicle 2 picks the target goods;
the picking vehicle 2 is descended by the lifting mechanism 3 to the ground; and
the picking vehicle 2 transports the picked goods away.

As shown in FIG. 1 and FIG. 2, the working process of a specific embodiment of the goods picking system is listed below:
warehouse control system software (WCS) issues an order task and distributes the task to the picking vehicle 2 without a task close to a target goods box.

The picking vehicle 2 automatically plans a route and enters the laneway 13 where the target goods box is located according to the route.

The picking vehicle 2 enters the laneway 13 and runs to a position below the shelf where the goods box is located.

The picking vehicle 2 finely adjusts the position to make the lifting mechanism 3 align with the upright column 11.

The two guide wheels 32 of the lifting mechanism 3 extend out in place, and at this time, the guide wheel group (two guide wheels 32) abuts against the inclined surfaces of the two sides of the stator 311 on the upright column 11 to form a group of linear guide mechanism.

The rotor 312 of the lifting mechanism 3 extends out in place, and at this time, the rotor and the stator 311 on the upright column 11 form a group of linear motor 31.

When the primary of the linear motor 31 is electrified, a magnetic field will generate in an air gap. The magnetic field interacts with the secondary to generate an electromagnetic thrust, and the whole picking vehicle 2 starts to ascend vertically along the guide under the action of the electromagnetic thrust.

After the picking vehicle 2 ascends to a layer where the target goods area is located, the brake 33 acts, the linear motor 31 is powered off, and the picking vehicle 2 stops at the current position.

The supporting plate 22 acts and extends out along the guide rail to the turnover box 7 on the goods area, the limiting piece 23 ascends after the supporting plate 22 is in place, then the supporting plate 22 continues to act to be retracted into the vehicle body, and at this time, the limiting piece 23 may bring the turnover box 7 on the shelf back to the vehicle body.

The electromagnetic thrust of the linear motor 31 is adjusted, the brake 33 relieves contracting brake, and the picking vehicle 2 starts to descend until the ground.

After the picking vehicle 2 falls onto the ground, the rotor 312 and the guide wheels 32 of the lifting mechanism 3 are retracted into the vehicle body to be disconnected with the shelf 1.

The picking vehicle 2 automatically plans a route, and drives out of the laneway 13 according to the route to enter the picking station 4.

After arriving at the picking station 4, the picking vehicle 2 drives into the picking station 41 along the up ramp 42.

The operator picks goods from the turnover box 7 on the picking vehicle 2 according to display information and puts the goods into the order box 8 on the first conveying line 5 beside him/her.

After picking is completed, the picking vehicle 2 drives depart from the picking station 4 along the down ramp 43.

After driving away from the picking station 4, the picking vehicle 2 drives into the laneway 13 again and repeats the above action to bring the turnover box 7 on the vehicle back to the shelf 1.

After descending on the ground, the picking vehicle 2 continues to accept a new task, and drives into the charging position 9 for waiting if there is no task.

After the order box 8 is full, the first conveying line 5 acts to convey the order box 7 to the second conveying line 6, and the second conveying line 6 continues to convey the order box 7 downstream to a check packaging station.

In the description of the present disclosure, it should be understood that the words "first", "second" and the like for limiting parts are merely for convenience of distinguishing the parts. Unless otherwise stated, the above words do not have special meanings and cannot be construed as limitations to the protection scope of the present disclosure.

## Claims

1. A goods picking system, comprising:
a shelf (1), comprising at least one layer of carrier, each layer of the carrier comprising at least one goods area for storing goods;
a picking vehicle (2), configured to not only run on the shelf (1), but also run outside of the shelf (1) for loading, unloading and transporting the goods; the picking vehicle (2) comprises a vehicle body (21), and a running wheel (24) and a universal wheel (25) which are arranged on the vehicle body (21) for realizing that the picking vehicle (2) runs outside of the shelf (1); and
a lifting mechanism (3), configured to make the picking vehicle (2) run up and down on the shelf (1) to load and unload the goods;
**characterized in that**,
the lifting mechanism (3) comprises a linear motor (31), a stator (311) or a rotor (312) of the linear motor (31) being arranged on the shelf (1), and correspondingly, the rotor (312) or the stator (311) of the linear motor (31) being arranged on the picking vehicle (2).

2. The goods picking system according to claim 1, wherein the picking vehicle (2) is configured to run from the shelf (1) to an area away from the shelf (1); and/or the picking vehicle (2) is configured to run from the area away from the shelf (1) to the shelf (1).

3. The goods picking system according to claim 1, comprising at least two shelves (1), wherein a laneway (13) for the picking vehicle (2) to run is formed between at least one group of adjacent two shelves (1).

4. The goods picking system according to claim 3, comprising:
a first lifting mechanism, arranged between one end of the picking vehicle (2) and the shelf (1) on one side of the laneway (13); and
a second lifting mechanism, arranged between the other end of the picking vehicle (2) and the shelf (1) on the other side of the laneway (13).

5. The goods picking system according to claim 1, wherein the goods area comprises at least one group of L-shaped plates (12) arranged oppositely, the L-shaped plates (12) arranged oppositely being configured to jointly bear the goods.

6. The goods picking system according to claim 1, wherein the picking vehicle (2) comprises a supporting plate (22), the supporting plate (22) being configured to perform telescopic action relative to the shelf (1) to load and unload the goods, optionally, the picking vehicle (2) comprises a limiting piece (23) arranged on the supporting plate (22) in an up-and-down liftable manner, the limiting piece (23) being in an ascending state relative to the supporting plate (22) for limiting the goods on the supporting plate (22).

7. The goods picking system according to claim 1, wherein the rotor (312) or the stator (311) arranged on the picking vehicle (2) is configured to extend out relative to the picking vehicle (2) or retract into the picking vehicle (2), and/or, the lifting mechanism (3) comprises a guide wheel (32), the guide wheel (32) being arranged on two sides of the rotor (312) or the stator (311) arranged on the picking vehicle (2).

8. The goods picking system according to claim 1, wherein the lifting mechanism (3) comprises a guide wheel (32), the guide wheel (32) being arranged on the picking vehicle (2) for guiding when the picking vehicle (2) runs on the shelf (1), optionally, the guide wheel (32) is configured to extend out relative to the picking vehicle (2) or retract into the picking vehicle (2).

9. The goods picking system according to claim 1, further comprising a picking station (4) configured to pick the goods transported by the picking vehicle (2), and optionally, the picking station (4) comprises:
a picking position (41), configured to pick the goods transported here by the picking vehicle (2);
an up ramp (42), connected to the picking position (41) and configured to allow the picking vehicle (2) run upward along the up ramp to the picking position (41); and
a down ramp (43), connected to the picking position (41) and configured to allow the picking vehicle (2) run downward along the down ramp to depart from the picking position (41).

10. The goods picking system according to claim 1, further comprising a first conveying line (5) and a second conveying line (6), wherein the first conveying line (5) is configured to convey an empty order box (8), and the second conveying line (6) is configured to convey an order box (8) after loading to a downstream check packaging station, or the first conveying line (5) is configured to convey an order box (8) with goods, and the second conveying line (6) is configured to convey an empty order box (8) after unloading to downstream.

11. A goods picking method of the goods picking system as defined in claim 1, comprising:
a picking vehicle (2) runs from an area away from a shelf (1) to the shelf (1);
the picking vehicle (2) runs to a target goods area on the shelf (1) for loading and unloading goods; and
the picking vehicle (2) runs from the shelf to the area away from the shelf.

12. The goods picking method of the goods picking system as defined in claim 11, wherein
the step: the picking vehicle (2) runs from an area away from a shelf (1) to the shelf (1), comprises: the picking vehicle (2) runs below the target goods area;
the step: the picking vehicle (2) runs to a target goods area on the shelf (1), comprises: the picking vehicle (2) runs upward along the shelf (1) to the target goods area to complete loading or unloading; and
the step: the picking vehicle (2) runs from the shelf to the area away from the shelf, comprises: the picking vehicle (2) runs downward along the shelf (1) to the bottom of the shelf (1) so as to depart from the shelf (1).

## Patentansprüche

1. Ein Warenkommissioniersystem, umfassend:
ein Regal (1), umfassend mindestens eine Trägerlage, wobei jede Trägerlage mindestens einen Warenbereich zum Aufbewahren von Waren umfasst;
ein Kommissionierfahrzeug (2), das konfiguriert ist, um nicht nur auf dem Regal (1) zu fahren, sondern auch außerhalb des Regals (1) zum Beladen, Entladen und Transportieren der Waren zu fahren; wobei das Kommissionierfahrzeug (2) einen Fahrzeugkörper (21) und ein Laufrad (24) und ein Universalrad (25) umfasst, die auf dem Fahrzeugkörper (21) angeordnet sind, um zu realisieren, dass das Kommissionierfahrzeug (2) außerhalb des Regals (1) fährt; und
einen Hebemechanismus (3), der konfiguriert ist, um das Kommissionierfahrzeug (2) auf dem Regal (1) auf und ab fahren zu lassen, um die Waren zu laden und zu entladen;
**dadurch gekennzeichnet, dass**
der Hebemechanismus (3) einen Linearmotor (31) umfasst, wobei ein Stator (311) oder ein Rotor (312) des Linearmotors (31) auf dem Regal (1) angeordnet ist, und entsprechend der Rotor (312) oder der Stator (311) des Linearmotors (31) auf dem Kommissionierfahrzeug (2) angeordnet ist.

2. Das Warenkommissioniersystem gemäß Anspruch 1, wobei das Kommissionierfahrzeug (2) konfiguriert ist, um von dem Regal (1) zu einem von dem Regal (1) entfernten Bereich zu fahren; und/oder das Kommissionierfahrzeug (2) konfiguriert ist, um von dem Regal (1) entfernten Bereich zu dem Regal (1) zu fahren.

3. Das Warenkommissioniersystem gemäß Anspruch 1, umfassend mindestens zwei Regale (1), wobei eine Fahrspur (13) zum Fahren des Kommissionierfahrzeugs (2) zwischen mindestens einer Gruppe von benachbarten zwei Regalen (1) gebildet ist.

4. Das Warenkommissioniersystem gemäß Anspruch 3, umfassend:
einen ersten Hebemechanismus, der zwischen einem Ende des Kommissionierfahrzeugs (2) und dem Regal (1) auf einer Seite der Fahrspur (13) angeordnet ist; und
einen zweiten Hebemechanismus, der zwischen dem anderen Ende des Kommissionierfahrzeugs (2) und dem Regal (1) auf der anderen Seite der Fahrspur (13) angeordnet ist.

5. Das Warenkommissioniersystem gemäß Anspruch 1, wobei der Warenbereich mindestens eine Gruppe von gegenüberliegend angeordneten L-förmigen Platten (12) umfasst, wobei die gegenüberliegend angeordneten L-förmigen Platten (12) konfiguriert sind, um die Waren gemeinsam zu tragen.

6. Das Warenkommissioniersystem gemäß Anspruch 1, wobei das Kommissionierfahrzeug (2) eine Stützplatte (22) umfasst, wobei die Stützplatte (22) konfiguriert ist, um eine Teleskopwirkung relativ zu dem Regal (1) auszuführen, um die Waren zu beladen und zu entladen, wobei optional das Kommissionierfahrzeug (2) ein Begrenzungsstück (23) umfasst, das auf der Stützplatte (22) in einer auf- und abhebbaren Weise angeordnet ist, wobei das Begrenzungsstück (23) in einem aufsteigenden Zustand relativ zu der Stützplatte (22) ist, um die Waren auf der Stützplatte (22) zu begrenzen.

7. Das Warenkommissioniersystem gemäß Anspruch 1, wobei der Rotor (312) oder der Stator (311), der auf dem Kommissionierfahrzeug (2) angeordnet ist, konfiguriert ist, um sich relativ zu dem Kommissionierfahrzeug (2) nach außen zu erstrecken oder sich in das Kommissionierfahrzeug (2) zurückzuziehen, und/oder der Hebemechanismus (3) ein Führungsrad (32) umfasst, wobei das Führungsrad (32) an zwei Seiten des am Kommissionierfahrzeug (2) angeordneten Rotors (312) oder Stators (311) angeordnet ist.

8. Das Warenkommissioniersystem gemäß Anspruch 1, wobei der Hebemechanismus (3) ein Führungsrad (32) umfasst, wobei das Führungsrad (32) auf dem Kommissionierfahrzeug (2) angeordnet ist, um zu führen, wenn das Kommissionierfahrzeug (2) auf dem Regal (1) fährt, wobei optional das Führungsrad (32) konfiguriert ist, um sich relativ zu dem Kommissionierfahrzeug (2) nach außen zu erstrecken oder sich in das Kommissionierfahrzeug (2) zurückzuziehen.

9. Das Warenkommissioniersystem gemäß Anspruch 1, weiterhin umfassend eine Kommissionierstation (4), die konfiguriert ist, um die Waren, die durch das Kommissionierfahrzeug (2) transportiert werden, zu kommissionieren, und wobei die Kommissionierstation (4) optional umfasst:
eine Kommissionierposition (41), die konfiguriert ist, um die Waren, die durch das Kommissionierfahrzeug (2) hierher transportiert werden, zu kommissionieren;
eine Aufwärtsrampe (42), die an die Kommissionierposition (41) angeschlossen ist und konfiguriert ist, um es dem Kommissionierfahrzeug (2) zu erlauben, entlang der Aufwärtsrampe nach oben zu der Kommissionierposition (41) zu fahren; und
eine Abwärtsrampe (43), die an die Kommissionierposition (41) angeschlossen ist und konfiguriert ist, um es dem Kommissionierfahrzeug (2) zu erlauben, entlang der Abwärtsrampe nach unten zu fahren, um die Kommissionierposition (41) zu verlassen.

10. Das Warenkommissioniersystem gemäß Anspruch 1, ferner umfassend eine erste Förderlinie (5) und eine zweite Förderlinie (6), wobei die erste Förderlinie (5) konfiguriert ist, um eine leere Auftragsbox (8) zu fördern, und die zweite Förderlinie (6) konfiguriert ist, um eine Auftragsbox (8) nach dem Beladen zu einer nachgelagerten Kontrollverpackungsstation zu fördern, oder die erste Förderlinie (5) konfiguriert ist, um eine Auftragsbox (8) mit Waren zu fördern, und die zweite Förderlinie (6) konfiguriert ist, um eine leere Auftragsbox (8) nach dem Entladen nachgelagert zu fördern.

11. Ein Warenkommissionierverfahren des Warenkommissioniersystems gemäß Anspruch 1, umfassend:
ein Kommissionierfahrzeug (2) fährt von einem von einem Regal (1) entfernten Bereich zu dem Regal (1);
das Kommissionierfahrzeug (2) fährt zu einem Zielwarenbereich auf dem Regal (1) zum Beladen und Entladen von Waren; und
das Kommissionierfahrzeug (2) fährt von dem Regal zu dem von dem Regal entfernten Bereich.

12. Das Warenkommissionierverfahren des Warenkommissioniersystems gemäß Anspruch 11, wobei
der Schritt: das Kommissionierfahrzeug (2) fährt von einem von einem Regal (1) entfernten Bereich zu dem Regal (1), umfasst: das Kommissionierfahrzeug (2) fährt unterhalb des Zielwarenbereichs;
der Schritt: das Kommissionierfahrzeug (2) fährt zu einem Zielwarenbereich auf dem Regal (1), umfasst: das Kommissionierfahrzeug (2) fährt aufwärts entlang des Regals (1) zu dem Zielwarenbereich, um das Beladen oder Entladen abzuschließen; und
der Schritt: das Kommissionierfahrzeug (2) fährt von dem Regal zu dem von dem Regal entfernten Bereich, umfasst: das Kommissionierfahrzeug (2) fährt abwärts entlang des Regals (1) zu dem Boden des Regals (1), um das Regal (1) zu verlassen.

## Revendications

1. Un système de cueillette de marchandises, comprenant :
une étagère (1), comprenant au moins une couche de support, chaque couche du support comprenant au moins une aire de marchandises pour stocker des marchandises ;
un véhicule de cueillette (2), configuré non seulement pour rouler sur l'étagère (1), mais aussi pour rouler à l'extérieur de l'étagère (1) pour charger, décharger et transporter les marchandises ; le véhicule de cueillette (2) comprend un corp de véhicule (21), et une roue de roulement (24) et une roue universelle (25) qui sont agencées sur le corps de véhicule (21) pour réaliser que le véhicule de cueillette (2) roule à l'extérieur de l'étagère (1) ; et
un mécanisme de levage (3), configuré pour faire monter et descendre le véhicule de cueillette (2) sur l'étagère (1) pour charger et décharger les marchandises ; **caractérisé en ce que**
le mécanisme de levage (3) comprend un moteur linéaire (31), un stator (311) ou un rotor (312) du moteur linéaire (31) étant agencé sur l'étagère (1), et de manière correspondante, le rotor (312) ou le stator (311) du moteur linéaire (31) étant agencé sur le véhicule de cueillette (2).

2. Le système de cueillette de marchandises selon la revendication 1, dans lequel le véhicule de cueillette (2) est configuré pour rouler de l'étagère (1) à une zone s'éloignant de l'étagère (1) ; et/ou le véhicule de cueillette (2) est configuré pour rouler de la zone s'éloignant de l'étagère (1) à l'étagère (1).

3. Le système de cueillette de marchandises selon la revendication 1, comprenant au moins deux étagères (1), où une voie (13) pour le déplacement du véhicule de cueillette (2) est formée entre au moins un groupe de deux étagères adjacentes (1).

4. Le système de cueillette de marchandises selon la revendication 3, comprenant :
un premier mécanisme de levage, agencé entre une extrémité du véhicule de cueillette (2) et l'étagère (1) sur un côté de la voie (13) ; et
un second mécanisme de levage, agencé entre l'autre extrémité du véhicule de cueillette (2) et l'étagère (1) sur l'autre côté de la voie (13).

5. Le système de cueillette de marchandises selon la revendication 1, dans lequel l'aire de marchandises comprend au moins un groupe de plaques en forme de L (12) agencées à l'opposé, les plaques en forme de L (12) agencées à l'opposé étant configurées pour supporter conjointement les marchandises.

6. Le système de cueillette de marchandises selon la revendication 1, dans lequel le véhicule de cueillette (2) comprend une plaque de support (22), la plaque de support (22) étant configurée pour effectuer une action télescopique par rapport à l'étagère (1) pour charger et décharger les marchandises, facultativement, le véhicule de cueillette (2) comprend une pièce de limitation (23) agencée sur la plaque de support (22) de manière à être relevable vers le haut et vers le bas, la pièce de limitation (23) étant dans un état ascendant par rapport à la plaque de support (22) pour limiter les marchandises sur la plaque de support (22).

7. Le système de cueillette de marchandises selon la revendication 1, dans lequel le rotor (312) ou le stator (311) agencé sur le véhicule de cueillette (2) est configuré pour s'étendre vers l'extérieur par rapport au véhicule de cueillette (2) ou se rétracter dans le véhicule de cueillette (2), et/ou, le mécanisme de levage (3) comprend une roue de guidage (32), la roue de guidage (32) étant agencée sur deux côtés du rotor (312) ou du stator (311) agencé sur le véhicule de cueillette (2).

8. Le système de cueillette de marchandises selon la revendication 1, dans lequel le mécanisme de levage (3) comprend une roue de guidage (32), la roue de guidage (32) étant agencée sur le véhicule de cueillette (2) pour guider, lorsque le véhicule de cueillette (2) roule sur l'étagère (1), facultativement, la roue de guidage (32) est configurée pour s'étendre vers l'extérieur par rapport au véhicule de cueillette (2) ou se rétracter dans le véhicule de cueillette (2).

9. Le système de cueillette de marchandises selon la revendication 1, comprenant en outre un poste de cueillette (4) configuré pour cueillir les marchandises transportées par le véhicule de cueillette (2), et facultativement, le poste de cueillette (4) comprend :
une position de cueillette (41), configurée pour cueillir les marchandises transportées ici par le véhicule de cueillette (2) ;
une rampe ascendante (42), connectée à la position de cueillette (41) et configurée pour permettre au véhicule de cueillette (2) de monter le long de la rampe ascendante jusqu'à la position de cueillette (41) ; et
une rampe descendante (43), connectée à la position de cueillette (41) et configurée pour permettre au véhicule de cueillette (2) de descendre le long de la rampe descendante pour quitter la position de cueillette (41).

10. Le système de cueillette de marchandises selon la revendication 1, comprenant en outre une première ligne de transport (5) et une deuxième ligne de transport (6), où la première ligne de transport (5) est configurée pour transporter une boîte d'ordre vide (8), et la deuxième ligne de transport (6) est configurée pour transporter une boîte d'ordre (8) après chargement jusqu'à un poste de contrôle d'emballage en aval, ou la première ligne de transport (5) est configurée pour transporter une boîte d'ordre (8) avec des marchandises, et la deuxième ligne de transport (6) est configurée pour transporter une boîte d'ordre vide (8) après déchargement jusqu'à l'aval.

11. Un procédé de cueillette de marchandises du système de cueillette de marchandises selon la revendication 1, comprenant :
un véhicule de cueillette (2) roule d'une zone s'éloignant d'une étagère (1) à l'étagère (1) ;
le véhicule de cueillette (2) roule jusqu'à une zone de marchandises cible sur l'étagère (1) pour charger et décharger des marchandises ; et
le véhicule de cueillette (2) roule de l'étagère à la zone s'éloignant de l'étagère.

12. Le procédé de cueillette de marchandises du système de cueillette de marchandises selon la revendication 11, où
l'étape : le véhicule de cueillette (2) roule d'une zone s'éloignant d'une étagère (1) à l'étagère (1), comprend : le véhicule de cueillette (2) roule en dessous de la zone de marchandises cible ;
l'étape : le véhicule de cueillette (2) roule jusqu'à une zone de marchandises cible sur l'étagère (1), comprend : le véhicule de cueillette (2) roule vers le haut le long de l'étagère (1) jusqu'à la zone de marchandises cible pour compléter le chargement ou le déchargement ; et
l'étape : le véhicule de cueillette (2) roule de l'étagère à la zone s'éloignant de l'étagère, comprend : le véhicule de cueillette (2) roule vers le bas le long de l'étagère (1) jusqu'au fond de l'étagère (1) de manière à quitter l'étagère (1).
